(19) Europäisches Patentamt European Patent Office Office européen des brevets

(11) **EP 4 752 515 A1**

(12) **EUROPEAN PATENT APPLICATION**
published in accordance with Art. 153(4) EPC

(43) Date of publication:
**03.06.2026 Bulletin 2026/23**

(21) Application number: **24845444.9**

(22) Date of filing: **12.07.2024**

(51) International Patent Classification (IPC):
**G01M 11/02** (2006.01)

(52) Cooperative Patent Classification (CPC):
**G01M 11/02**

(86) International application number:
**PCT/JP2024/025228**

(87) International publication number:
**WO 2025/023063 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.07.2023 JP 2023121994**

(71) Applicant: **Fujikura Ltd.**
**Tokyo 135-8512 (JP)**

(72) Inventors:
 • **TAKENAGA, Katsuhiro**
  **Sakura-shi, Chiba 285-8550 (JP)**
 • **NAKAGAWA, Mayu**
  **Sakura-shi, Chiba 285-8550 (JP)**

(74) Representative: **Hoffmann Eitle**
**Patent- und Rechtsanwälte PartmbB**
**Arabellastraße 30**
**81925 München (DE)**

(54) **CROSSTALK MEASUREMENT DEVICE AND CROSSTALK MEASUREMENT METHOD**

(57)     A crosstalk measurement device (1) for an optical device including a core (11) and a core (12) that each include one end and other end and are parallel to each other, the crosstalk measurement device including a connection optical fiber (51) optically connecting the other end (18) of the core (11) and the other end (18) of the core (12), an optical component provided closer to the core (11) than a midpoint (C) of the connection optical fiber (51), the optical component having a larger loss of light incident from the core (11) side toward the core (12) side than a loss of light incident from the core (12) side toward the core (11) side, an OTDR (20) that causes incident light to enter from the one end (17) of the core (11), and measures power of emitted light emitted from the one end (17) of the core (11), the emitted light including crosstalk light (CL1) generated by crosstalk of the incident light from the core (11) to the core (12), and a processing unit (25) that obtains a magnitude of crosstalk between the core (11) and the core (12) by using the measured power of the emitted light.

FIG. 2

EP 4 752 515 A1

## Description

Technical Field

The present invention relates to a crosstalk measurement device and a crosstalk measurement method.

Background Art

In response to an increase in the amount of information communication in recent years, an increase in transmission capacity of an optical fiber is demanded. A multicore fiber is attracting attention because it can increase space utilization efficiency and can transmit a large amount of information in a limited space. However, a plurality of cores is arranged in one optical fiber, and thus it is difficult to evaluate characteristics as compared with a single-core fiber. Therefore, a technique for efficiently evaluating a multicore fiber is demanded. In particular, measurement of crosstalk is an important measurement item in a multicore fiber and is not included in a measurement item of a single-core fiber, and thus it is necessary to newly prepare a measurement device or the like.

As a crosstalk measurement method, methods described in the following Non Patent Literatures are known. Non Patent Literature 1 below discloses a Power Meter (PM) method. The PM method is a method in which light is caused to enter a predetermined core of a multicore fiber from one end of the core, and power of light emitted from the other end of the core in which crosstalk with the core occurs is measured. Non Patent Literatures 2 and 3 below describe an optical time domain reflectometer (OTDR) method. In the OTDR method, light is caused to enter a predetermined core using a multichannel OTDR, and light in which backscattered light of the light that has crosstalk with another core is detected to measure the crosstalk.

In the crosstalk measurement methods described in Non Patent Literatures 2 and 3, since backscattered light of light after crosstalk is measured, power of the measured light is small, and there is a concern that it is difficult to measure crosstalk. In a multicore fiber having small crosstalk, it is further difficult to measure crosstalk.

On the other hand, in the PM method, it is necessary to cause light to enter from one end of a multicore fiber and receive light emitted from the other end. On the other hand, in the OTDR method, it is sufficient if light is caused to enter from one end of a multicore fiber and light emitted from the one end is received. Therefore, there is a need to measure the crosstalk using the OTDR.

In view of the above needs, in the crosstalk measurement method described in Non Patent Literature 4, a predetermined core and another core for measuring crosstalk with the predetermined core are optically connected by an optical fiber at the other end of the multicore fiber, and power of crosstalk light generated by the crosstalk is measured using the OTDR. In this crosstalk measurement method, the OTDR causes incident light to enter one end of the predetermined core, the incident light causes crosstalk light to be generated in another core to which an optical fiber is optically connected, and light including the crosstalk light incident on the predetermined core from the other core via the optical fiber is emitted from one end of the predetermined core. The power of the emitted light is measured by the OTDR. Furthermore, in this crosstalk measurement method, crosstalk between a predetermined core and another core is obtained on the basis of the measured power of light.

[Non Patent Literature 1] K. Takenaga, Y. Arakawa, S. Tanigawa, N. Guan, S. Matsuo, K. Saitoh and M. Koshiba, "An Investigation on Crosstalk in Multi-Core Fibers by Introducing Random Fluctuation along Longitudinal Direction," IEICE TRAN. COMMUN., Vol.E94-B, No.2, 2011.

[Non Patent Literature 2] M. Ohashi, K. Kawazu, A. Nakamura, and Y. Miyoshi, "Simple backscattered power technique for measuring crosstalk of multicore fibers," OptoElectronics and Communications Conference, Busan, South Korea, P1-25, 2012, DOI: https://doi.org/10.1109/OECC.2012.6276724

[Non Patent Literature 3] M. Nakazawa, M. Yoshida, and T. Hirooka, "Nondestructive measurement of mode couplings along a multi-core fiber using a synchronous multi-channel OTDR," Optics Express, vol. 20, Issue 11, pp. 12530-12540, 2012

[Non Patent Literature 4] M. Nakagawa, M. Ohzeki, K. Takenaga and K. Ichii, "Novel Inter-Core Crosstalk Measurement Method Using a Loopback and Bidirectional OTDR Technique," Journal of Lightwave Technology, vol. 41, Issue 12, pp. 3842-3848, 2023

Summary of Invention

Backscattered light due to incident light is generated in the optical fiber. Therefore, there is a demand for reducing backscattered light in an optical fiber and accurately measuring crosstalk using an OTDR even when the crosstalk is small.

Therefore, an object of the present invention is to provide a crosstalk measurement device and a crosstalk measurement method that accurately measure crosstalk using an OTDR.

In order to achieve the above object, a first aspect of the present invention is a crosstalk measurement device for an optical device including a first optical waveguide and a second optical waveguide that each include one end and other end and are parallel to each other, the crosstalk measurement device including a connection optical waveguide optically connecting the other end of the first optical waveguide and the other end of the second optical waveguide, an optical component provided closer to the first optical waveguide than a midpoint of the connection optical waveguide, the optical component having a larger loss of light incident from a side of the first optical waveguide toward a side of the second optical waveguide than a loss of light incident from the side of the second optical waveguide toward the side of the first optical waveguide, an OTDR that causes incident light to enter from the one end of the first optical waveguide, and measures power of emitted light emitted from the one end of the first optical waveguide, the emitted light including crosstalk light generated by crosstalk of the incident light from the first optical waveguide to the second optical waveguide, and a processing unit that obtains a magnitude of crosstalk between the first optical waveguide and the second optical waveguide by using the measured power of the emitted light.

Incident light propagating from the one end to the other end of the first optical waveguide propagates from the first optical waveguide to the second optical waveguide while causing crosstalk. The incident light reaching the other end of the first optical waveguide enters the connection optical waveguide. The incident light incident on the connection optical waveguide is attenuated by the optical component on the first optical waveguide side from the midpoint of the connection optical waveguide.

Therefore, crosstalk light that causes crosstalk from the first optical waveguide to the second optical waveguide propagates from one end side to the other end of the second optical waveguide while traveling substantially in parallel with the incident light. The crosstalk light propagating to the other end of the second optical waveguide enters the connection optical waveguide from an opposite side of the incident light. The crosstalk light incident on the connection optical waveguide passes through the optical component and enters the first optical waveguide. At this time, the crosstalk light is not attenuated as much as the incident light. The crosstalk light incident on the first optical waveguide passes through the first optical waveguide and is received by the OTDR. The crosstalk measurement device measures the power of the crosstalk light received by the OTDR, and obtains the magnitude of the crosstalk on the basis of the measurement result.

The crosstalk light and the attenuated incident light intersect substantially at a midpoint of the connection optical waveguide. The OTDR measures the power of combined light of the crosstalk light and the backscattered light of the attenuated incident light as the power of the light at substantially the midpoint of the connection optical waveguide. In the present aspect, since the optical component is provided closer to the first optical waveguide than the midpoint of the connection optical waveguide, the incident light is already attenuated at the midpoint of the connection optical waveguide. Thus, the backscattered light of the incident light at the midpoint where the crosstalk light and the incident light intersect is small, and the backscattered light and noise generated from the backscattered light can be suppressed from being superimposed on the crosstalk light. Therefore, the crosstalk measurement device of the present aspect can accurately measure the power of the crosstalk light and more accurately measure the crosstalk.

A second aspect of the present invention is the crosstalk measurement device according to the first aspect, in which the optical component is an isolator in which a forward direction is a direction from the side of the second optical waveguide to the side of the first optical waveguide.

A third aspect of the present invention is the crosstalk measurement device according to the first aspect, in which the optical component is a circulator including a first port, a second port that emits light incident on the first port, and a third port that propagates incident light to the first port, the first port is optically connected to the first optical waveguide via a part of the connection optical waveguide, and the third port is optically connected to the second optical waveguide via another part of the connection optical waveguide.

A fourth aspect of the present invention is the crosstalk measurement device according to the third aspect, in which the second port is optically connected to one end of a predetermined optical waveguide, and other end of the predetermined optical waveguide is optically connected to a non-reflective termination.

Even in a case where incident light incident on the second port is reflected at the other end of the predetermined optical waveguide, reflection is suppressed by the non-reflective termination, and the incident light that is reflected can be suppressed from being incident on the second port. Thus, incident light can be suppressed from being incident on the first waveguide side from the first port of the circulator. Therefore, the reflected light detected by the OTDR and the backscattered light near the midpoint of the connection optical waveguide are suppressed, and superimposition of reflected light pulses, backscattered light of the reflected light pulses, and noise generated from the backscattered light can be suppressed at the position close to the crosstalk light pulse. Therefore, the crosstalk measurement device of the present aspect can accurately measure the power of the crosstalk light and more accurately measure the crosstalk.

A fifth aspect of the present invention is the crosstalk measurement device according to the third aspect, in which the second port is optically connected to one end of a predetermined optical waveguide, and an optical path between the first port and the other end of the predetermined optical waveguide has a length other than a half of an optical path between the first port and a midpoint of the connection optical waveguide.

When the incident light is reflected at the other end of the predetermined optical waveguide, the incident light enters the connection optical waveguide on the first optical waveguide side from the first port. Since the optical path between the first port and the other end of the predetermined optical waveguide has a length other than a half of the optical path between the first port and the midpoint of the connection optical waveguide, even in a case where the incident light is reflected at the other end of the predetermined optical waveguide, it is possible to prevent the incident light and the crosstalk light reflected at the termination of the predetermined optical waveguide from overlapping or intersecting with each other. Thus, noise generated from reflected light and backscattered light can be suppressed from being superimposed on the crosstalk light. Therefore, the crosstalk measurement device of the present aspect can accurately measure the power of the crosstalk light and further measure the crosstalk.

A sixth aspect of the present invention is the crosstalk measurement device according to the first aspect, in which the optical component is a coupler including a first port, a second port that emits a part of the incident light incident on the first port, and a third port that emits another part of the incident light incident on the first port and propagates the incident light to the first port, the first port is optically connected to the first optical waveguide via a part of the connection optical waveguide, and the third port is optically connected to the second optical waveguide via another part of the connection optical waveguide.

A seventh aspect of the present invention is the crosstalk measurement device according to the sixth aspect, in which the second port is optically connected to one end of a predetermined optical waveguide, and other end of the predetermined optical waveguide is optically connected to a non-reflective termination.

Even in a case where incident light incident on the second port is reflected at the other end of the predetermined optical waveguide, reflection is suppressed by the non-reflective termination, and the incident light that is reflected can be suppressed from being incident on the second port. Thus, incident light can be suppressed from being incident on the first optical waveguide side from the first port of the coupler. Therefore, superimposition of incident light or the like on crosstalk light on the first optical waveguide side can be suppressed. Therefore, the crosstalk measurement device of the present aspect can accurately measure the power of the crosstalk light and more accurately measure the crosstalk.

An eighth aspect of the present invention is the crosstalk measurement device according to any one of the first to seventh aspects, in which the optical device includes a trench layer surrounding at least one of the first optical waveguide or the second optical waveguide.

The crosstalk between the first optical waveguide and the second optical waveguide can be reduced by the trench layer as compared with the case where there is no trench layer. Thus, the power of the crosstalk light decreases, and the influence of the backscattered light of the connection optical waveguide on the crosstalk light can increase. Therefore, in the crosstalk measurement device of the present aspect, the effect of suppressing the backscattered light with respect to the measurement of the power of the crosstalk light and accurately measuring the crosstalk can be remarkable.

A ninth aspect of the present invention is the crosstalk measurement device according to any one of the first to eighth aspects, in which a wavelength width of the incident light is equal to or more than 1 nm.

In this case, the crosstalk measurement device of the present aspect can reduce an error in the power of the emitted light measured by the OTDR.

A tenth aspect of the present invention is the crosstalk measurement device according to any one of the first to eighth aspects, in which a length of the connection optical waveguide is longer than a length corresponding to a half-value time width of the incident light.

As described above, the attenuated incident light and the crosstalk light pass each other at substantially a midpoint of the connection optical waveguide. Therefore, in the OTDR, it seems that the pulsed light generated by the crosstalk is generated at substantially the midpoint of the connection optical waveguide. In addition, a pulse width of the incident light and a pulse width of the crosstalk light are substantially the same. Therefore, the crosstalk measurement device of the present aspect can suppress noise such as reflection at an end of the connection optical waveguide from affecting emitted light including pulsed crosstalk light, and the crosstalk can be measured more accurately.

An eleventh aspect of the present invention is a crosstalk measurement method for an optical device including a first optical waveguide and a second optical waveguide that each include one end and other end and are parallel to each other, the crosstalk measurement method including a connection step of optically connecting the other end of the first optical waveguide and the other end of the second optical waveguide via a connection optical waveguide, a measuring step of causing incident light emitted from an OTDR to enter from the one end of the first optical waveguide, and measuring, by the OTDR, power of emitted light emitted from the one end of the first optical waveguide, the emitted light including crosstalk light generated by crosstalk of the incident light from the first optical waveguide to the second optical waveguide, and a processing step of obtaining a magnitude of crosstalk between the first optical waveguide and the second optical waveguide by using the measured power of the emitted light, in which an optical component having a larger loss of light incident from a side of the first optical waveguide toward a side of the second optical waveguide than a loss of light incident from the side of the second optical waveguide toward the side of the first optical waveguide is provided closer to the first optical waveguide than a midpoint of the connection optical waveguide.

As described above, the incident light propagating from one end to the other end of the first optical waveguide propagates while inducing crosstalk from the first optical waveguide to the second optical waveguide, and is attenuated by the optical component on the first optical waveguide side from the midpoint of the connection optical waveguide.

In addition, the crosstalk light that causes crosstalk from the first optical waveguide to the second optical waveguide is not attenuated as much as the incident light even when passing through the optical component. In the crosstalk measurement method, the power of the crosstalk light received by the OTDR is measured, and the magnitude of the crosstalk is obtained on the basis of the measurement result.

In the present aspect, since the optical component is provided closer to the first optical waveguide than the midpoint of the connection optical waveguide, the incident light is attenuated at the midpoint of the connection optical waveguide. Thus, backscattering of the incident light at the position where the crosstalk light and the incident light intersect is suppressed, and the backscattered light and noise generated from the backscattered light can be suppressed from being superimposed on the crosstalk light. Therefore, in the crosstalk measurement method of the present aspect, the power of the crosstalk light can be accurately measured using the OTDR, and the crosstalk can be more accurately measured. In addition, the loss due to crosstalk of the fan-in-fan-out device (FIFO), the loss of the optical component, the loss of the connecting waveguide, the backscattering coefficient, and the capturing rate are measured in advance, so that the crosstalk can be accurately measured in consideration of the loss of the crosstalk light. Furthermore, the OTDR is connected to one end side of the second optical waveguide, and the loss of the second optical waveguide, the loss of the connection waveguide, the loss of the optical component, the loss of the first optical waveguide, the loss due to the crosstalk of the fan-in-fan-out device, and the insertion loss are accurately obtained, whereby the crosstalk can be more accurately measured in consideration of the loss of the crosstalk light.

As described above, according to the present invention, a crosstalk measurement device and a crosstalk measurement method capable of accurately measuring crosstalk using an OTDR method are provided.

Brief Description of Drawings

[FIG. 1] FIG. 1 is a diagram illustrating a cross section perpendicular to a longitudinal direction of a multicore fiber according to a first embodiment of the present invention.
[FIG. 2] FIG. 2 is a diagram illustrating a crosstalk measurement device according to the first embodiment.

[FIG. 3] FIG. 3 is a flowchart illustrating a procedure of a crosstalk measurement method according to the first embodiment of the present invention.
[FIG. 4] FIG. 4 is a diagram illustrating a state of light propagation in the crosstalk measurement device of FIG. 3.
[FIG. 5] FIG. 5 is a diagram illustrating a measurement result in an OTDR.
[FIG. 6] FIG. 6 is a diagram illustrating a cross section perpendicular to a longitudinal direction of a multicore fiber according to a second embodiment of the present invention.
[FIG. 7] FIG. 7 is a diagram illustrating a refractive index profile of a core element in FIG. 6.
[FIG. 8] FIG. 8 is a diagram illustrating a measurement result in an OTDR according to the second embodiment.
[FIG. 9] FIG. 9 is a diagram illustrating a crosstalk measurement device according to a third embodiment.
[FIG. 10] FIG. 10 is a diagram illustrating a crosstalk measurement device according to a fourth embodiment.

Description of Embodiments

Hereinafter, embodiments for implementing a crosstalk measurement method and a crosstalk measurement device according to the present invention will be illustrated together with the accompanying drawings. The embodiments exemplified below are intended to facilitate understanding of the present invention and are not intended to limit the present invention. The present invention can be modified and improved from the following embodiments within the scope of the claims without departing from the gist thereof. Note that, in the drawings referred to below, dimensions of each member may be changed for easy understanding.

(First Embodiment)

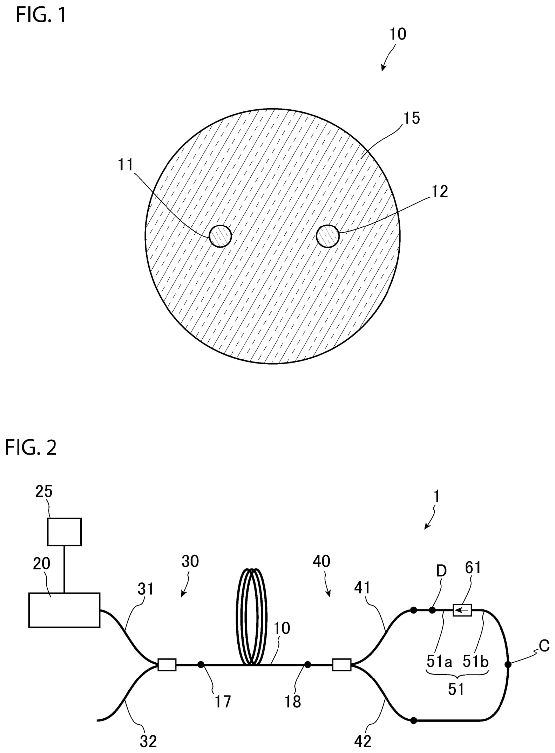

FIG. 1 is a diagram illustrating a cross section perpendicular to a longitudinal direction of a multicore fiber according to the present embodiment. A multicore fiber 10 includes a plurality of cores 11 and 12 capable of propagating light and a cladding 15 surrounding an outer peripheral surface of each of the cores 11 and 12. Note that the outer peripheral surface of the cladding 15 may be surrounded by a coating layer made of resin. Further, the cladding 15 is also called a common cladding because it surrounds the outer peripheral surfaces of the cores 11 and 12.

Each of the cores 11 and 12 has one end and other end, and is parallel to each other along the longitudinal direction of the multicore fiber 10. The refractive indexes of the cores 11 and 12 are higher than the refractive index of the cladding 15, and each of the cores 11 and 12 can propagate light. Therefore, the core 11 and the core 12 are a first optical waveguide and a second optical waveguide, respectively, and the multicore fiber 10 is an optical device having a plurality of optical waveguides arranged in parallel with each other. The core 11 and the core 12 may be spirally formed and arranged in parallel, or the cores 11 and 12 may be linearly formed and arranged in parallel.

In the present embodiment, the cores 11 and 12 are made of silica glass doped with a dopant such as germanium (Ge) having a high refractive index, and the cladding 15 is made of silica glass without any additive. Note that, for example, the cores 11 and 12 may be made of silica glass without any additive, and the cladding 15 may be made of silica glass to which a dopant such as fluorine (F) having a low refractive index is added. Further, the cores 11 and 12 may be made of silica glass doped with a dopant having a high refractive index, and the cladding 15 may be made of silica glass doped with a dopant having a low refractive index. The dopant having a high refractive index and the dopant having a low refractive index are not particularly limited.

Next, a crosstalk measurement device in the optical device of the present embodiment will be described. FIG. 2 is a diagram illustrating a crosstalk measurement device according to the present embodiment. As illustrated in FIG. 2, a crosstalk measurement device 1 of the present embodiment includes an OTDR 20, a processing unit 25, a connection optical fiber 51, and an isolator 61 as main components, and measures crosstalk in a multicore fiber 10. The multicore fiber 10 has one end 17 and other end 18. Note that, in the following description, the one end 17 and the other end 18 may also be described as the one end 17 and the other end 18 of the cores 11 and 12.

The OTDR 20 is used by being optically connected to an optical fiber or the like, and can emit pulsed light, measure the power of light incident from the multicore fiber 10, and measure the time from when the pulsed light is emitted to when the measured light is incident. In addition, the OTDR 20 is a device capable of measuring a loss of light such as a transmission loss, a bending loss, and a connection loss of an optical fiber or the like, detecting a disconnection portion of an optical fiber or the like, measuring a reflection amount of light, and the like. In the present embodiment, a fan-in-fan-out device 30 is optically connected to the OTDR 20.

The fan-in-fan-out device 30 includes a plurality of optical waveguides, not illustrated, individually and optically connectable to the cores 11 and 12 at one end 17 of the multicore fiber 10, and optical fibers 31 and 32 each including a core individually and optically connected to each optical waveguide. The optical fiber 31 and the optical fiber 32 have substantially the same length. In this example, the core of the optical fiber 31 is optically connected to the OTDR 20. Further, in this example, the optical waveguide optically connected to the core of the optical fiber 31 is optically connected to the core 11 of the multicore fiber 10. Therefore, the optical fiber 31 and the core 11 are optically connected, and light emitted from the OTDR 20 enters the core 11.

A fan-in-fan-out device 40 is optically connected to the other end 18 of the multicore fiber 10. The fan-in-fan-out device 40 has a configuration similar to that of the fan-in-fan-out device 30, and includes a plurality of optical waveguides, not illustrated, individually and optically connectable to the cores 11 and 12 of the multicore fiber 10, and optical fibers 41 and 42 each including a core individually and optically connected to each optical waveguide. The optical fiber 41 and the optical fiber 42 have substantially the same length. In this example, the core 11 and the core of the optical fiber 41 are optically connected, and the core 12 and the core of the optical fiber 42 are optically connected.

The connection optical fiber 51 is a single-core fiber, for example, a single-mode fiber. The connection optical fiber 51 is divided into a part 51a and the other part 51b. One end of the part 51a of the connection optical fiber 51 is optically connected to the optical fiber 41, and the other end is optically connected to one end of an isolator 61. In addition, one end of the other part 51b of the connection optical fiber 51 is optically connected to the other end of the isolator 61, and the other end is optically connected to the optical fiber 42. Therefore, the core of the optical fiber 41 and the core of the optical fiber 42 are optically connected via the core of the connection optical fiber 51 and the isolator 61. The core of the connection optical fiber 51 is a connection optical waveguide that optically connects the other end of the first optical waveguide that is the core 11 and the other end of the second optical waveguide that is the core 12. Note that the core of the part 51a and the core of the other part 51b of the connection optical fiber 51 are a part and another part of the connection optical waveguide, respectively.

In the connection optical fiber 51, the isolator 61 is provided closer to the optical fiber 41 than the midpoint C of the connection optical fiber 51. The forward direction of the isolator 61 is a direction from the optical fiber 42 side to the optical fiber 41 side. The isolator 61 attenuates light from the optical fiber 41 side and transmits light from the optical fiber 42 side to the optical fiber 41 side. Note that the isolator 61 may block propagation of light from the optical fiber 41 side to the optical fiber 42.

Therefore, the isolator 61 is an optical component in which the loss of light incident from the side of the first optical waveguide that is the core 11 toward the side of the second optical waveguide that is the core 12 is larger than the loss of light incident from the side of the second optical waveguide side to the side of the first optical waveguide side. Further, the forward direction of the isolator 61 is a direction from the second optical waveguide side to the first optical waveguide side.

The midpoint C is a point at which the optical path between the other end 18 of the core 11 and the optical path between the other end 18 of the core 12 are substantially the same.

The processing unit 25 is optically connected to the OTDR 20, and data related to the power of light received by the OTDR 20 is output to the processing unit 25. The processing unit 25 is an arithmetic device that obtains the magnitude of crosstalk using the power of light measured by the OTDR 20. The processing unit 25 can use, for example, an integrated circuit such as a microcontroller, an integrated circuit (IC), a large-scale integrated circuit (LSI), or an application specific integrated circuit (ASIC), or a numerical control (NC) device. Furthermore, the processing unit 25 may use a machine learning device or may not use a machine learning device. When data related to the power of light is input from the OTDR 20, the processing unit 25 obtains the magnitude of crosstalk between the core 11 and the core 12 on the basis of data as described later, and outputs data related to the obtained magnitude of crosstalk. Note that the processing unit 25 and the OTDR 20 may be housed in one housing, and a part of the components may be shared.

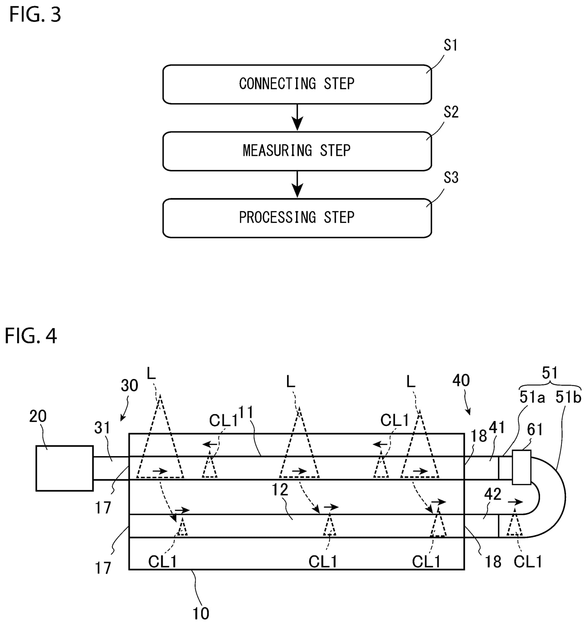

Next, a crosstalk measurement method in the optical device of the present embodiment will be described. FIG. 3 is a flowchart illustrating a procedure of the crosstalk measurement method in the present embodiment. As illustrated in FIG. 3, the crosstalk measurement method of the present embodiment includes a connecting step S1, a measuring step S2, and a processing step S3.

(Connecting Step S1)

Prior to this step, the multicore fiber 10 as the optical device to be measured is prepared and set in the crosstalk measurement device 1. The length of the multicore fiber 10 is, for example, 21 km. At this time, in this step, the other end 18 of the core 11 and the other end 18 of the core 12 are optically connected via the core of the connection optical fiber 51 in which the isolator 61 is provided closer to the optical fiber 41 than the midpoint C. The length of the connection optical fiber 51 is, for example, 10 km. Specifically, an optical waveguide optically connected to the optical fiber 41 in the fan-in-fan-out device 40 is optically connected to the core 11 of the multicore fiber 10, and an optical waveguide optically connected to the optical fiber 42 is optically connected to the core 12. Therefore, in this step, the other end of the first optical waveguide and the other end of the second optical waveguide are optically connected via the connection optical waveguide. After this step, when light is incident from the one end 17 of the core 11, the light enters the core 12 from the other end 18 of the core 12 via the core of the connection optical fiber 51.

In addition, the OTDR 20 and the core 11 are optically connected. Specifically, an optical waveguide connected to the optical fiber 31 in the fan-in-fan-out device 30 is optically connected to the core 11 of the multicore fiber 10. Therefore, the light emitted from the OTDR 20 enters the core 11 from the one end 17 of the core 11.

As described above, a state in which the core 11 of the multicore fiber 10 and the OTDR 20 are optically connected, and the core 11 and the core 12 are optically connected via the core of the connection optical fiber 51 is a state illustrated in FIG. 2.

(Measuring Step S2)

In this step, pulsed incident light emitted from the OTDR 20 is caused to enter from the one end 17 of the core 11 which is the first optical waveguide, and power of emitted light emitted from the one end 17 of the core 11 is measured by the OTDR 20, the emitted light including pulsed light generated by crosstalk of the incident light to the core 12 which is the second optical waveguide.

FIG. 4 is a diagram illustrating a state of light propagation in the crosstalk measurement device of FIG. 3. The above will be specifically described with reference to the drawing. Note that, in FIG. 4, the fan-in-fan-out devices 30 and 40 are simplified. First, pulsed light is emitted from the OTDR 20. From the viewpoint of stably performing the later-described crosstalk measurement, the wavelength width of the light is preferably equal to or more than 1 nm, more preferably equal to or more than 3 nm, and still more preferably equal to or more than 5 nm. Further, a wavelength width of this light is preferably equal to or less than 30 nm from the viewpoint of measuring crosstalk at a certain specific wavelength. In addition, it is preferable that a pulse width and intensity of the light emitted from the OTDR 20 are appropriately adjusted so that emitted light including crosstalk light described later is not saturated. In this case, an attenuator may be interposed between the OTDR 20 and the optical fiber 31.

The pulsed light emitted from the OTDR 20 enters the core 11 from the one end 17 of the core 11 as incident light L, and propagates through the core 11 from the one end 17 to the other end 18. The pulsed incident light L propagating through the core 11 propagates from the core 11 to the core 12 while causing crosstalk. Since the incident light L is pulsed, crosstalk light CL1 that causes crosstalk from the core 11 to the core 12 is also pulsed and propagates from the one end 17 side to the other end 18 of the core 12 while traveling substantially in parallel with the incident light L. During this time, since the crosstalk occurs from the core 11 to the core 12, the power of the incident light L decreases according to the distance propagated through the core 11, and the power of the crosstalk light CL1 increases according to the distance propagated through the core 12. Since the speed of light propagating through the cores 11 and 12 is the same, the incident light L and the crosstalk light CL1 reach the other end 18 substantially at the same time.

Next, the incident light L and the crosstalk light CL1 are incident on the core of the connection optical fiber 51 substantially simultaneously via the fan-in-fan-out device 40.

The incident light L incident on the connection optical fiber 51 from the optical fiber 41 passes through the point D of the part 51a of the connection optical fiber 51 and enters the isolator 61. Since the isolator 61 is provided closer to the core 11 than the midpoint C, the incident light L attenuates closer to the core 11 than the midpoint C. The incident light L attenuated by the isolator 61 enters the core 12 from the other end 18 of the core 12 via the fan-in-fan-out device 40 and propagates through the core 12. Although the attenuated incident light L is crosstalk to the core 11 while propagating through the core 12, the crosstalk from the core 12 to the core 11 is substantially negligible because the incident light L is sufficiently attenuated, for example.

Further, the crosstalk light CL1 enters the core of the connection optical fiber 51 from the side opposite to the side on which the incident light L is incident. The crosstalk light CL1 passes through the isolator 61. The crosstalk light CL1 passes by the incident light L, which has been attenuated at substantially the midpoint C of the connection optical fiber 51. The attenuated incident light L and the crosstalk light CL1 reach different ends of the connection optical fiber 51 substantially simultaneously.

The crosstalk light CL1 having passed through the connection optical fiber 51 enters the core 11 from the other end 18 of the core 11 via the fan-in-fan-out device 40, propagates through the core 11, and is emitted from the one end 17 of the core 11. The emitted light including the crosstalk light CL1 emitted from the core 11 enters the OTDR 20 via the fan-in-fan-out device 30 and received by the OTDR 20, and the power of the emitted light is measured by the OTDR 20.

Therefore, the OTDR 20 measures power of emitted light emitted from the one end of the first optical waveguide, the emitted light including crosstalk light generated by crosstalk of incident light from the first optical waveguide to the second optical waveguide.

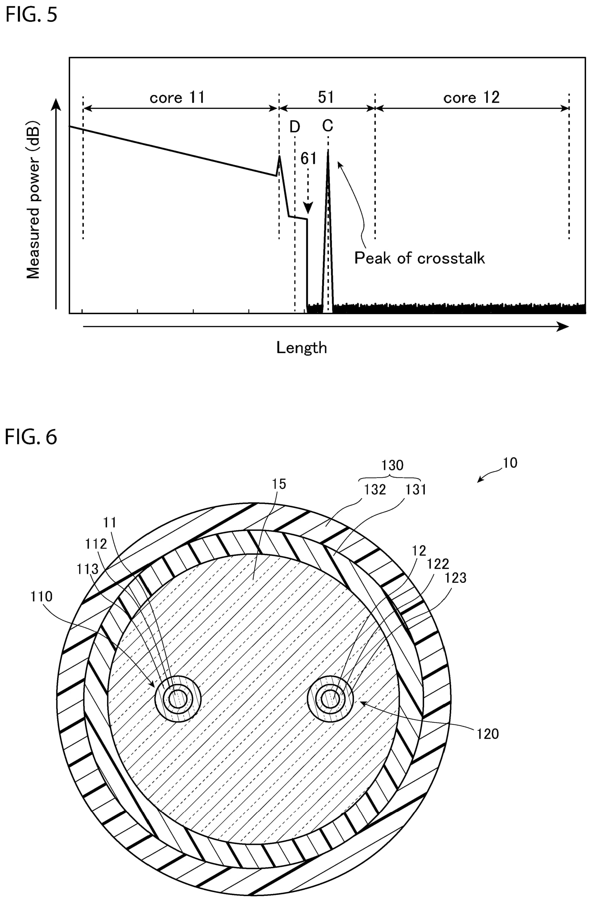

FIG. 5 is a diagram illustrating a measurement result of emitted light received by the OTDR 20. In FIG. 5, the horizontal axis represents the propagation distance of the incident light L, and the vertical axis represents the power of the emitted light received by the OTDR 20. Note that the vertical axis in FIG. 5 represents the ratio of the power of the emitted light to a predetermined power defined in the OTDR 20 in decibels. For example, when the predetermined power is 1 mW, the unit of the vertical axis may be indicated by dBm. As illustrated in FIG. 5, in a section of the core 11 and a section from the other end 18 of the core 11 to the isolator 61 in the connection optical fiber 51, backscattered light of the incident light L is measured as emitted light. The inclination of the line indicating the emitted light in these sections indicates a loss of the incident light L per unit length due to backscattering.

Further, pulsed light is measured at the boundary between the section of the core 11 and the section of the connection optical fiber 51, and this light indicates reflection in the fan-in-fan-out device 40 or the like. Furthermore, a waveform due to backscattered light of the connection optical fiber is observed between the isolator 61 and the fan-in-fan-out device 40 in the section of the connection optical fiber 51. Here, the point D illustrated in FIG. 2 is included.

In addition, since the incident light L is attenuated in the section closer to the core 12 than the isolator 61, the backscattered light of the incident light L is substantially not measured in the section.

Pulsed light is measured at substantially the midpoint C of the section indicating the connection optical fiber 51. As described above, since the attenuated incident light L and the crosstalk light CL1 pass each other at substantially the midpoint of the connection optical fiber 51, this pulsed light indicates the crosstalk light CL1. In addition, since the backscattered light is not substantially measured at the midpoint C, the power of the emitted light measured at substantially the midpoint C of the connection optical fiber 51 is substantially the power of the crosstalk light CL1.

As described above, a pulse indicating the power of the crosstalk light CL1 is illustrated at substantially the midpoint of the section indicating the connection optical fiber 51. The pulse width of the incident light L and the pulse width of the crosstalk light CL1 are substantially the same. Therefore, in order to prevent the pulse indicating the crosstalk light CL1 from being applied to an end of the connection optical fiber 51, the length of the core of the connection optical fiber 51 as the connection optical waveguide is preferably longer than the length corresponding to the half-value time width of the pulse of the incident light L. That is, in a case where the length of the connection optical fiber 51 is $L_{SCF}$, the half-value time width of the incident light L is $\Delta T_{pulse}$, the refractive index of the core of the connection optical fiber 51 is n, and the light speed is c, the following expression is preferably satisfied.

$$L_{SCF} > \Delta T_{pulse} \times c/n$$

Note that it is more preferable to satisfy the following expression from the viewpoint of further suppressing the influence of the end of the connection optical fiber 51 from affecting the pulse.

$$L_{SCF} > 1.2 \times \Delta T_{pulse} \times c/n$$

The OTDR 20 outputs data related to the measured power of the emitted light to the processing unit 25.

(Processing Step S3)

In this step, the processing unit 25 obtains the magnitude of crosstalk between the core 11 and the core 12 using the measured power of the emitted light. Even in the region where the pulsed light is shown as described above, backscattered light is generated by the attenuated incident light L. However, since power $P_{BS}$ of the backscattered light generated by the incident light L attenuated in the region is negligibly small as described above, information of the power $P_{BS}$ serving as a reference of the incident light intensity may not be obtained. Therefore, it is desirable to use the power $P'_{BS}$ of the point D on the part 51a of the connection optical fiber 51 closer to the core 11 than the isolator as a reference. The processing unit 25 acquires the crosstalk in consideration of the ratio between the power $P_{OUT}$ and the power $P'_{BS}$ of the emitted light in the region, the crosstalk of the fan-in-fan-out devices 30 and 40, the loss coefficient of the connection optical fiber 51 corresponding to the distance between the point D and the midpoint C, the insertion loss of the isolator in the forward direction, the backscattering coefficient of the connection optical fiber 51, and the capture rate.

The power of the pulsed light includes power $P_{XT\_MCF}$ of the crosstalk light CL1 and power $P_{XT\_FIFO}$ of crosstalk in the fan-in-fan-out devices 30 and 40. When the power $P_{XT\_FIFO}$ is negligibly small, the power of the pulsed light only needs to be set to power $P_{XT-MCF}$ of the crosstalk light CL1. However, it is preferable to set the power obtained by removing the power $P_{XT\_FIFO}$ from the power of the pulsed light as the power $P_{XT\_MCF}$ of the crosstalk light CL1 from the viewpoint of more accurately obtaining the power $P_{XT\_MCF}$.

The power $P_{XT\_FIFO}$ can be measured in advance. For example, in the crosstalk measurement device 1, the fan-in-fan-out device 30 and the fan-in-fan-out device 40 are optically directly connected. In this manner, the length of the multicore fiber 10 becomes 0, and when the power of the emitted light is measured in the same manner as in the measuring step S2, the power $P_{OUT}$ of the pulsed light measured at substantially the midpoint of the connection optical fiber 51 is the power $P_{XT\_FIFO}$.

The processing unit 25 converts the obtained power $P_{XT\_MCF}$ of the crosstalk light CL1 into the magnitude of the crosstalk and outputs the magnitude of the crosstalk. At this time, the processing unit 25 determines the magnitude of the crosstalk in consideration of the crosstalk of the fan-in-fan-out devices 30 and 40, the loss of the connection optical fiber 51 corresponding to the distance between the point D and the midpoint C, the loss of the isolator in the forward direction, the backscattering coefficient of the connection optical fiber 51, and the capture rate with respect to the ratio of the power $P'_{BS}$ and the power $P_{XT\_MCF}$ of the backscattered light of the incident light L that has passed through the other end 18 and the one end 17 of the core 11 and returned to the OTDR as the backscattered light of the incident light from the point D on the part 51a of the connection optical fiber 51. At this time, the power ratio may be converted into decibels and output. In addition, the processing unit 25 may convert the power into decibels indicating the ratio with respect to the predetermined power defined in the OTDR 20 and output the decibels. In this way, the magnitude of crosstalk is obtained. The crosstalk required here is one-way crosstalk of the multicore fiber 10.

Note that the processing unit 25 may calculate the power $P_{BS}$. For example, the processing unit 25 may obtain the power $P_{BS}$ from the power of the emitted light in a region other than the region where the pulsed light is indicated. In this case, the processing unit 25 may acquire a difference between the power $P_{OUT}$ of the emitted light in the region where the pulsed light is indicated and the obtained power $P_{BS}$ of the backscattered light as the power of the pulsed light.

In the crosstalk measurement method, the second measuring step may be executed after the measuring step S2. In the second measuring step, the crosstalk from the core 12 to the core 11 is measured. For example, both ends of the connection optical fiber 51 optically connected to the optical fiber 41 and the optical fiber 42 are replaced, and the OTDR 20 is optically connected to the optical fiber 32. In this state, the OTDR 20 measures the power $P_{OUT}$ of the emitted light and outputs the power $P_{OUT}$ to the processing unit 25. The processing unit 25 obtains crosstalk from the core 12 to the core 11 on the basis of the power $P_{OUT}$ of the output emitted light. The processing unit 25 may obtain the crosstalk between the core 11 and the core 12 by averaging the crosstalk from the core 12 to the core 11 and the crosstalk from the core 11 to the core 12.

In addition, the optical fiber 41 and the optical fiber 42 may have different lengths. In this case, the midpoint C only needs to be a point where the optical path between the midpoint C and the other end 18 of the core 11 and the optical path between the midpoint C and the other end 18 of the core 12 are substantially the same.

Furthermore, in the above description, the crosstalk is obtained based on the backscattered light power at the point D on the part 51a of the connection optical fiber 51, but in consideration of the loss of the core 11, the crosstalk of the fan-in-fan-out devices 30 and 40, and the loss, the crosstalk can be obtained even using the backscattered light power on the core 11.

As described above, the crosstalk measurement method of the present embodiment can attenuate the incident light L on the core 11 side with respect to the midpoint C using the isolator 61 and attenuate the backscattered light generated by the incident light L at the midpoint C. Therefore, the backscattered light and noise generated from the backscattered light can be suppressed from being superimposed on the crosstalk light CL1. Therefore, the crosstalk measurement method of the present embodiment can accurately measure the power of the crosstalk light CL1 and accurately measure the crosstalk.

(Second Embodiment)

Next, a second embodiment will be described. Note that the same or equivalent components as those in the first embodiment are denoted by the same reference numerals, and redundant description is omitted unless otherwise specified. The present embodiment is different from the first embodiment in that a multicore fiber 10 has a trench layer.

FIG. 6 is a diagram illustrating a cross section perpendicular to a longitudinal direction of a multicore fiber according to the present embodiment. The multicore fiber 10 of the present embodiment includes a core element 110, a core element 120, a cladding 15 that surrounds the outer peripheral surfaces of the core element 110 and the core element 120 without any gap, and a coating layer 130 that coats the outer circumferential surface of the cladding 15.

The core element 110 includes a core 11, an outer core 112 that surrounds the outer circumferential surface of the core 11 without any gap, and a trench layer 113 that surrounds the outer peripheral surface of the outer core 112 without any gap. Further, the core element 120 includes a core 12, an outer core 122 that surrounds the outer peripheral surface of the core 12 without any gap, and a trench layer 123 that surrounds the outer peripheral surface of the outer core 122 without a gap.

Since the core element 110 and the core element 120 have similar configurations, and the outer core 112 and the trench layer 113 are similar to the outer core 122 and the trench layer 123, the core element 110 will be described below.

The diameter of the core 11 is, for example, equal to or more than 5.5 μm and equal to or less than 13.5 μm. The outer diameter of the outer core 112, that is, the inner diameter of the trench layer 113 is equal to or more than 9 μm and equal to or less than 35 μm. Further, the outer diameter of the trench layer 113 is equal to or more than 14 μm and equal to or less than 50 μm.

The refractive index of the core 11 is higher than the refractive index of the outer core 112 or the cladding 15, and the relative refractive index difference of the core 11 to the cladding 15 is, for example, equal to or more than 0.2% and equal to or less than 0.9%. The refractive index of the trench layer 113 is lower than the refractive index of the outer core 112 or the cladding 15. The relative refractive index difference of the trench layer 113 to the cladding 15 is, for example, equal to or more than -0.9% and equal to or less than -0.1%. The refractive index of the outer core 112 may be the same as the refractive index of the cladding 15, or may be higher or lower than the refractive index of the cladding 15. The relative refractive index difference of the outer core 112 to the cladding 15 is, for example, equal to or more than -0.3% and equal to or less than 0.3%.

The trench layer 113 is made of silica glass to which a dopant such as fluorine having a low refractive index is added. In the outer core 112, a dopant having a high refractive index is added, a dopant having a low refractive index is added, or no dopant is added depending on the relationship with the refractive index of the cladding 15. Note that whether or not the dopant is added to the core 11, the outer core 112, the trench layer 113, and the cladding 15, and the type of the dopant in the case of being added are not limited to the above. In addition, a multicore fiber having a W-type refractive index profile core without the outer cores 112 and 122 may be used.

The coating layer 130 includes an inner coating layer 131 covering the outer peripheral surface of the cladding 15 and an outer coating layer 132 covering the outer peripheral surface of the inner coating layer 131. The inner coating layer 131 and the outer coating layer 132 are each made of a resin such as an ultraviolet curable resin, and the inner coating layer 131 and the outer coating layer 132 are made of resins different from each other.

Next, characteristics of the multicore fiber 10 will be described. Note that, in the following description, there is a case where the significant digits are described as three digits.

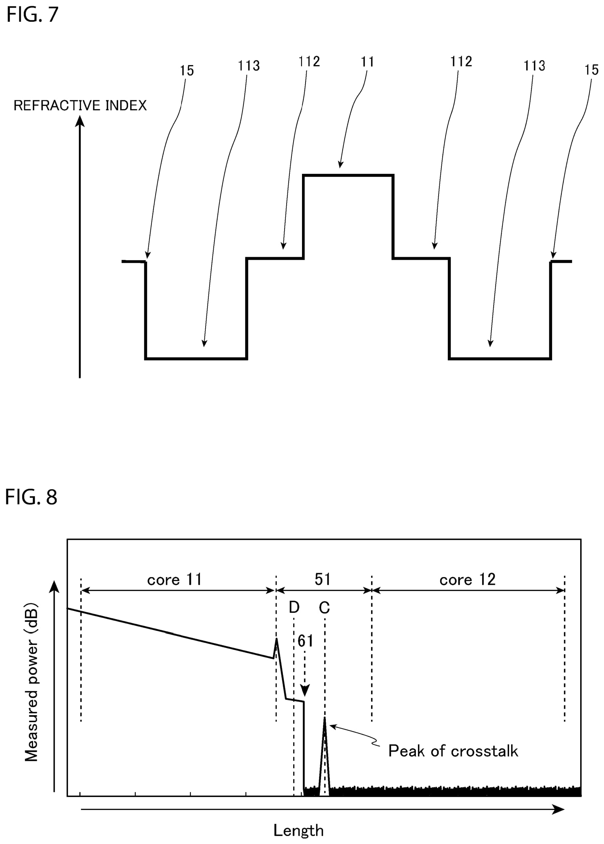

FIG. 7 is a diagram illustrating a predetermined refractive index profile of the core element 110 of the multicore fiber 10 in FIG. 6. In FIG. 7, positions indicating relative refractive index differences of the core 11, the outer core 112, the trench layer 113, and the cladding 15 are denoted by the same reference numerals. In this example, the relative refractive index difference of the outer core 112 to the cladding 15 is 0.01%. The relative refractive index difference of the core 11 to the outer core 112 is 0.35%. The relative refractive index difference of the trench layer 113 to the cladding 15 is - 0.4%.

Since the procedures of the crosstalk measurement device 1 and the crosstalk measurement method are similar to the procedures of the crosstalk measurement device 1 and the crosstalk measurement method according to the first embodiment, the description thereof will be omitted.

FIG. 8 is a diagram illustrating a measurement result of emitted light received by the OTDR 20. In FIG. 8, the horizontal axis represents the propagation distance of the incident light L, and the vertical axis represents the power of the emitted light received by the OTDR 20. Note that the vertical axis in FIG. 8 represents the ratio of the power of the emitted light to a predetermined power defined in the OTDR 20 in decibels. For example, when the predetermined power is 1 mW, the unit of the vertical axis may be indicated by dBm.

The measurement result illustrated in FIG. 8 is different from the measurement result illustrated in FIG. 5 in that the power of the pulsed light is small.

Note that the multicore fiber 10 need not include at least one of the outer core 112 or the outer core 122. In addition, at least one of the trench layer 113 or the trench layer 123 need not be provided. Further, at least one of the inner coating layer 131 or the outer coating layer 132 need not be provided.

As described above, in the crosstalk measurement method of the present embodiment, the crosstalk between the cores 11 and 12 provided with the trench layer is obtained. As described above, the crosstalk between the core 11 and the core 12 is small due to the trench layer, and the crosstalk light CL1 is also small. Therefore, the influence of the backscattered light superimposed on the crosstalk light CL1 and the noise generated from the backscattered light can be increased. Therefore, in the crosstalk measurement method of the present embodiment, an effect of suppressing noise superimposed on the crosstalk light CL1 and accurately measuring the crosstalk can be remarkable.

(Third Embodiment)

Next, a third embodiment will be described. Note that the same or equivalent components as those in the second embodiment are denoted by the same reference numerals, and redundant description is omitted unless otherwise specified. The present embodiment is different from the second embodiment in that the crosstalk measurement device 1 includes a circulator 71 instead of the isolator 61.

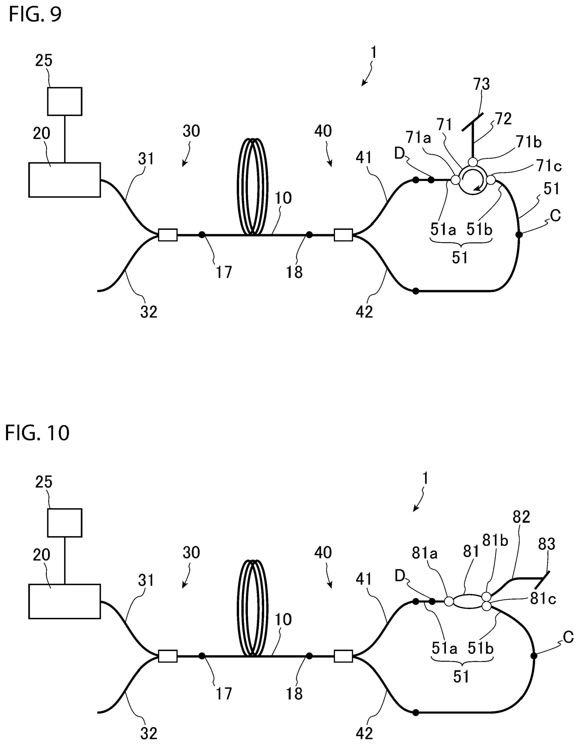

FIG. 9 is a diagram illustrating a crosstalk measurement device 1 according to the present embodiment. As illustrated in FIG. 9, in the connection optical fiber 51, the circulator 71 is provided closer to the optical fiber 41 than the midpoint C of the connection optical fiber 51. The circulator 71 has a first port 71a, a second port 71b, and a third port 71c.

The first port 71a emits light incident on the third port 71c. The second port 71b emits light incident on the first port 71a. The light incident on the second port 71b is not substantially emitted from the first port 71a and the third port 71c.

The first port 71a is optically connected to the other end of the part 51a of the connection optical fiber 51. Therefore, the first port 71a is optically connected to the core of the optical fiber 41 via the part 51a of the connection optical fiber 51. Further, the second port 71b is optically connected to one end of the core of an optical fiber 72 that is a predetermined optical waveguide. Furthermore, the third port 71c is optically connected to one end of the other part 51b of the connection optical fiber 51. Therefore, the third port 71c is optically connected to the core of the optical fiber 42 via the other part 51b of the connection optical fiber 51. The circulator 71 emits light from the optical fiber 41 from the second port 71b, and emits light from the optical fiber 42 to the optical fiber 41.

Thus, the circulator 71 is an optical component in which the loss of light incident from the side of the first optical waveguide that is the core 11 toward the side of the second optical waveguide that is the core 12 is larger than the loss of light incident from the side of the second optical waveguide to the side of the first optical waveguide.

The optical fiber 72 having one end optically connected to the second port 71b is a single-core fiber, for example, a single-mode fiber. The other end of the core of the optical fiber 72 is optically connected to a non-reflective termination 73.

The non-reflective termination 73 suppresses light from being reflected at the other end of the core of the optical fiber 72 and returning to the core of the optical fiber 72. The light reflected by the other end of the optical fiber 72 from the optical fiber 41 hardly exits from either of the first port 71a and the third port 71c, but since there is the non-reflective termination 73, it is possible to further suppress the light reflected by the other end of the optical fiber 72 from being emitted from the first port 71a and the third port 71c.

Next, a crosstalk measurement method in the optical device of the present embodiment will be described.

(Connecting Step S1)

The connecting step S1 is different from the connecting step S1 according to the first embodiment in that the other end 18 of the core 11 and the other end 18 of the core 12 are optically connected via the core of the connection optical fiber 51 in which the circulator 71 is provided closer to the optical fiber 41 than the midpoint C. The other operations are similar to those in the connecting step S1 according to the first embodiment, and thus the description thereof will be omitted.

(Measuring Step S2)

In the measuring step S2, the incident light L incident on the connection optical fiber 51 from the optical fiber 41 is incident on the first port 71a of the circulator 71 and is emitted from the second port 71b. The incident light L emitted from the second port 71b reaches the non-reflective termination 73 via the optical fiber 72 and substantially disappears at the non-reflective termination 73.

Further, the crosstalk light CL1 is incident on the third port 71c of the circulator 71 from the optical fiber 42 side, and is emitted from the first port 71a to the optical fiber 41 side.

The other operations are similar to those in the measuring step S2 according to the first embodiment, and thus the description thereof will be omitted.

The processing step S3 is similar to the processing step S3 according to the first embodiment, and thus description thereof is omitted.

Note that the non-reflective termination 73 need not be provided at the other end of the core of the optical fiber 72. In this case, it is desirable to adjust the length of the optical fiber 72 so that the incident light L reflected at the other end of the core of the optical fiber 72 and the crosstalk light CL1 do not pass by each other. Specifically, the length of the optical fiber 72 is adjusted so that the optical path between the first port 71a and the other end of the core of the optical fiber 72 has a length other than half of the optical path between the first port 71a and the midpoint C. When the length of the optical fiber 72 is adjusted as described above, even when the incident light L is reflected at the other end of the optical fiber 72 and slightly emitted from the circulator 71 to the optical fiber 41 side or the optical fiber 42 side, it is possible to prevent the incident light L and the crosstalk light CL1 from overlapping or passing each other at the midpoint C.

In addition, although the crosstalk measurement device 1 of the present embodiment has measured the crosstalk between the core 11 and the core 12 of the multicore fiber 10 having the trench layer, the crosstalk between the core 11 and the core 12 of the multicore fiber 10 having no trench layer as in the first embodiment may be measured.

As described above, the crosstalk measurement method of the present embodiment can attenuate the incident light L on the core 11 side with respect to the midpoint C using the circulator 71 and attenuate the backscattered light generated by the incident light L at the midpoint C. Further, the crosstalk light CL1 from the core 12 is transmitted through the circulator 71 and enters the core 11. Thus, the backscattered light of the incident light L and noise generated from the backscattered light can be suppressed from being superimposed on the crosstalk light CL1. Therefore, the crosstalk measurement method of the present embodiment can accurately measure the power of the crosstalk light CL1 and accurately measure the crosstalk.

In addition, in the crosstalk measurement method of the present embodiment, the non-reflective termination 73 is provided on the second port side from which the incident light L is emitted via the optical fiber 72. Therefore, the incident light L emitted from the second port can be suppressed from being reflected at the termination of the core of the optical fiber 72, and emission from the first port 71a to the optical fiber 41 and emission from the third port to the optical fiber 42 side can be suppressed. Therefore, the superimposition of the incident light L and the crosstalk light CL1 and the passing of the incident light L and the crosstalk light CL1 by each other are suppressed, and the superimposition of the incident light L, the backscattered light of the incident light L, and the noise generated from the backscattered light on the crosstalk light CL1 can be suppressed. Therefore, the crosstalk measurement method of the present embodiment can accurately measure the power of the crosstalk light CL1 and accurately measure the crosstalk. However, the reflected incident light L is attenuated even when the incident light L is reflected at the other end of the optical fiber 72, and thus, the non-reflective termination 73 is not essential.

In addition, in the crosstalk measurement method of the present embodiment, the length of the optical fiber 72 is adjusted so that the optical path between the first port 71a and the other end of the core of the optical fiber 72 has a length other than half of the optical path between the first port 71a and the midpoint C. Thus, the superimposition of the incident light L and the crosstalk light CL1 and the passing of the incident light L and the crosstalk light CL1 by each other are suppressed, and the superimposition of the incident light L, the backscattered light of the incident light L, and the noise generated from the backscattered light on the crosstalk light CL1 can be suppressed. Therefore, the crosstalk measurement method of the present embodiment can accurately measure the power of the crosstalk light CL1 and accurately measure the crosstalk. However, even when the incident light L is reflected at the other end of the optical fiber 72, the reflected incident light L is attenuated, and thus adjustment of the length of the optical fiber 72 is not essential.

Note that the other end of the part 51a of the connection optical fiber 51 may be optically connected to the second port 71b of the circulator 71. In addition, the circulator 71 may have four or more ports.

(Fourth Embodiment)

Next, a fourth embodiment will be described. Note that the same or equivalent components as those in the second embodiment are denoted by the same reference numerals, and redundant description is omitted unless otherwise specified. The present embodiment is different from the second embodiment in that the crosstalk measurement device 1 includes a coupler 81 instead of the isolator 61.

FIG. 10 is a diagram illustrating a crosstalk measurement device 1 according to the present embodiment. As illustrated in FIG. 10, in the connection optical fiber 51, the coupler 81 is provided closer to the optical fiber 41 than the midpoint C of the connection optical fiber 51. The coupler 81 has a first port 81a, a second port 81b, and a third port 81c. The coupler 81 divides the light incident on the first port 81a into the second port 81b and the third port 81c at a predetermined ratio and emits the light.

The first port 81a emits light incident on the second port 81b and the third port 81c. The second port 81b emits a part of the light incident on the first port 81a. The third port 81c emits another part of the light incident on the first port 81a, and propagates the incident light to the first port 81a. For example, the intensity of the light emitted from the second port 81b is stronger than the intensity of the light emitted from the third port 81c. For example, the ratio between the intensity of the light emitted from the second port 81b and the intensity of the light emitted from the third port 81c may be 99 : 1.

The first port 81a is optically connected to the other end of the part 51a of the connection optical fiber 51. Therefore, the first port 81a is optically connected to the core of the optical fiber 41 via the part 51a of the connection optical fiber 51. Further, the second port 81b is optically connected to one end of the core of an optical fiber 82 that is a predetermined optical waveguide. Furthermore, the third port 81c is optically connected to one end of the other part 51b of the connection optical fiber 51. Therefore, the third port 81c is optically connected to the core of the optical fiber 42 via the other part 51b of the connection optical fiber 51. The coupler 81 emits a part of the light from the optical fiber 41 to the optical fiber 82 and emits the other part to the optical fiber 42. Further, the coupler 81 emits light from the optical fiber 42 and light from the optical fiber 82 to the optical fiber 41.

The coupler 81 is an optical component in which the loss of light incident from the side of the first optical waveguide that is the core 11 toward the side of the second optical waveguide that is the core 12 is larger than the loss of light incident from the side of the second optical waveguide toward the side of the first optical waveguide.

The optical fiber 82 having one end optically connected to the second port 81b is a single-core fiber, for example, a single-mode fiber. The other end of the core of the optical fiber 82 is optically connected to a non-reflective termination 83.

The non-reflective termination 83 suppresses light from being reflected at the other end of the core of the optical fiber 82 and returning to the core of the optical fiber 82. The non-reflective termination 83 suppresses light incident from the optical fiber 41 through the coupler 81 from being reflected at the other end of the optical fiber 82 and emitted from the first port 81a toward the optical fiber 41.

Next, a crosstalk measurement method in the optical device of the present embodiment will be described.

(Connecting Step S1)

The connecting step S1 is different from the connecting step S1 according to the first embodiment in that the other end 18 of the core 11 and the other end 18 of the core 12 are optically connected via the core of the connection optical fiber 51 in which the coupler 81 is provided closer to the optical fiber 41 than the midpoint C. The other operations are similar to those in the connecting step S1 according to the first embodiment, and thus the description thereof will be omitted.

(Measuring Step S2)

In the measuring step S2, the incident light L incident on the connection optical fiber 51 from the optical fiber 41 is incident on the first port 81a of the coupler 81, and a part of the incident light L is emitted from the second port 81b. A part of the incident light L emitted from the second port 81b reaches the non-reflective termination 83 via the optical fiber 82 and substantially disappears at the non-reflective termination 83. Further, the other part of the incident light L incident on the first port 81a is emitted from the third port 81c of the coupler 81 to the optical fiber 42 side.

Further, the crosstalk light CL1 is incident on the third port 81c of the coupler 81 from the optical fiber 42 side, and is emitted from the first port 81a to the optical fiber 41 side.

The other operations are similar to those in the measuring step S2 according to the first embodiment, and thus the description thereof will be omitted.

The processing step S3 is similar to the processing step S3 according to the first embodiment, and thus description thereof is omitted.

Note that the non-reflective termination 83 need not be provided at the other end of the core of the optical fiber 82. In addition, the second port 81b need not be optically connected to the optical fiber 82. Even if the other end of the optical fiber 82 or the other end of the second port 81b to which the optical fiber 82 is not optically connected is not a non-reflective termination, the light reflected by the Fresnel reflection is about 4% at maximum, and a part of the incident light L is generally attenuated.

In addition, the optical path from the first port 81a to the other end of the second port 81b may be different from the optical path from the first port 81a to the midpoint C. In this case, even if the incident light L from the optical fiber 41 is reflected at the other end of the second port 81b and emitted from the first port 81a, the reflected incident light L and the crosstalk light CL1 can be suppressed from overlapping. Furthermore, in a case where the optical path from the first port 81a to the other end of the second port 81b is shorter than half of the optical path from the first port 81a to the midpoint C, it is possible to suppress the backscattered light of the optical fiber 82 from overlapping the crosstalk light CL1.

In addition, the crosstalk measurement device 1 of the present embodiment may measure crosstalk between the core 11 and the core 12 of the multicore fiber 10 according to the first embodiment.

As described above, in the crosstalk measurement method of the present embodiment, a part of the incident light L is emitted to the optical fiber 82 side on the core 11 side with respect to the midpoint C using the coupler 81. Therefore, in the crosstalk measurement method, the incident light L can be attenuated on the core 11 side with respect to the midpoint C, and the backscattered light generated by the incident light L can be attenuated at the midpoint C. Further, the crosstalk light CL1 from the core 12 passes through the coupler 81 and enters the core 11. Thus, the backscattered light of the incident light L and noise generated from the backscattered light can be suppressed from being superimposed on the crosstalk light CL1. Therefore, the crosstalk measurement method of the present embodiment can accurately measure the power of the crosstalk light CL1 and accurately measure the crosstalk.

In addition, in the crosstalk measurement method of the present embodiment, the non-reflective termination 83 is provided on the second port side from which the incident light L is emitted via the optical fiber 82. Therefore, the incident light L emitted from the second port can be suppressed from being reflected at the end of the core of the optical fiber 82, and can be suppressed from being emitted from the first port to the optical fiber 41 side. Therefore, the incident light L and the like are suppressed from overlapping with the crosstalk light CL1, and the incident light L and the like can be suppressed from overlapping with the crosstalk light CL1. Therefore, the crosstalk measurement method of the present embodiment can accurately measure the power of the crosstalk light CL1 and accurately measure the crosstalk. However, since the reflected incident light L is attenuated even when the incident light L is reflected at the other end of the optical fiber 72, the non-reflective termination 83 is not essential.

Although the present invention has been described by taking the above-described embodiment as an example, the present invention is not limited thereto.

For example, the arrangement and number of cores of the multicore fiber 10 may be different from those in the above embodiment. For example, the multicore fiber 10 may include four cores. Note that, in this step, the processing unit 25 may further obtain the magnitude of the crosstalk between the core 11 and another core on the basis of the obtained magnitude of the crosstalk between the core 11 and the core 12. For example, the processing unit 25 obtains the magnitude of the crosstalk between the core 11 and the other core using a relational expression indicating the relationship between the magnitude of the crosstalk between the core 11 and the core 12 and the magnitude of the crosstalk between the core 11 and the other core. In addition, the other cores may be optically connected at the other end 18.

In the above embodiment, the multicore fiber has been described as an example of the optical device in which the optical waveguides are arranged in parallel, but the optical device of the present invention is not limited to the multicore fiber. For example, it is applicable to an optical fiber cable in which a plurality of optical fibers is arranged, an optical fiber tape in which a plurality of optical fibers is arranged in a planar manner, a multielement fiber in which a plurality of optical fiber bare wires is arranged in one coating layer, and crosstalk measurement of the entire transmission system.

Further, in the above embodiment, for example, as illustrated in FIG. 5, the inclination of the power of the backscattered light measured by the OTDR 20 is substantially the same in the sections of the core 11, the connection optical fiber 51, and the like. This indicates that the loss of the incident light L per unit length due to backscattering is substantially the same in the sections of the core 11, the connection optical fiber 51, and the like. Therefore, in the above embodiment, the numerical aperture (NA) of the core 11 and that of the connection optical fiber 51 are substantially the same, and the magnitude of the power of the backscattered light per unit length generated in each section is substantially the same in a case where light of the same power is propagated through the core and the connection optical fiber. However, when light having the same power is propagated to the core 11, the connection optical fiber 51, and the like, the power of the backscattered light per unit length generated in the connection optical fiber 51 is preferably smaller than the power of the backscattered light per unit length generated in each of the core 11. As such a connection optical fiber 51, for example, a hollow core optical fiber having a hollow core can be exemplified. Alternatively, such a connection optical fiber 51 may be an optical fiber in which the relative refractive index difference of the core of the connection optical fiber 51 is smaller than that of light propagated through the core of the multicore fiber 10 and the effective cross-sectional area of the propagated light is larger. This is because the power of the backscattered light is proportional to a numerical aperture (NA) corresponding to the relative refractive index difference. The ratio of the power of the crosstalk light to the power of the backscattered light increases, and the crosstalk light is easily detected.

Further, in the measuring step S2 of the above embodiment, the crosstalk measurement device 1 may further measure at least one of light loss, reflection intensity, bending loss, or disconnection in an optical device such as the multicore fiber 10 by the OTDR 20.

In addition, the forms of the fan-in-fan-out devices 30 and 40 are not particularly limited. Further, the crosstalk measurement device 1 need not include at least one of the fan-in-fan-out devices 30 and 40. In this case, for example, the core 11 and the core 12 of the multicore fiber 10 are optically directly connected to the core of the connection optical fiber 51. In addition, the connection optical fiber 51 may include a connecting body of a plurality of optical fibers.

As described above, according to the present invention, a crosstalk measurement method and a crosstalk measurement device capable of accurately obtaining crosstalk using an OTDR are provided, and are expected to be used in the field of optical fiber communication and the like.

**Claims**

1. A crosstalk measurement device for an optical device including a first optical waveguide and a second optical waveguide that each include one end and other end and are parallel to each other, the crosstalk measurement device comprising:

   a connection optical waveguide optically connecting the other end of the first optical waveguide and the other end of the second optical waveguide;
   an optical component provided closer to the first optical waveguide than a midpoint of the connection optical waveguide, the optical component having a larger loss of light incident from a side of the first optical waveguide toward a side of the second optical waveguide than a loss of light incident from the side of the second optical waveguide toward the side of the first optical waveguide;

an optical time domain reflectometer (OTDR) that causes incident light to enter from the one end of the first optical waveguide, and measures power of emitted light emitted from the one end of the first optical waveguide, the emitted light including crosstalk light generated by crosstalk of the incident light from the first optical waveguide to the second optical waveguide; and
a processing unit that obtains a magnitude of crosstalk between the first optical waveguide and the second optical waveguide by using the measured power of the emitted light.

2. The crosstalk measurement device according to claim 1, wherein
the optical component is an isolator in which a forward direction is a direction from the side of the second optical waveguide to the side of the first optical waveguide.

3. The crosstalk measurement device according to claim 1, wherein

the optical component is a circulator including a first port, a second port that emits light incident on the first port, and a third port that propagates incident light to the first port,
the first port is optically connected to the first optical waveguide via a part of the connection optical waveguide, and
the third port is optically connected to the second optical waveguide via another part of the connection optical waveguide.

4. The crosstalk measurement device according to claim 3, wherein

the second port is optically connected to one end of a predetermined optical waveguide, and
other end of the predetermined optical waveguide is optically connected to a non-reflective termination.

5. The crosstalk measurement device according to claim 3, wherein

the second port is optically connected to one end of a predetermined optical waveguide, and
an optical path between the first port and the other end of the predetermined optical waveguide has a length other than a half of an optical path between the first port and a midpoint of the connection optical waveguide.

6. The crosstalk measurement device according to claim 1, wherein

the optical component is a coupler including a first port, a second port that emits a part of the incident light incident on the first port, and a third port that emits another part of the incident light incident on the first port and propagates the incident light to the first port,
the first port is optically connected to the first optical waveguide via a part of the connection optical waveguide, and
the third port is optically connected to the second optical waveguide via another part of the connection optical waveguide.

7. The crosstalk measurement device according to claim 6, wherein

the second port is optically connected to one end of a predetermined optical waveguide, and
other end of the predetermined optical waveguide is optically connected to a non-reflective termination.

8. The crosstalk measurement device according to any one of claims 1 to 7, wherein
the optical device includes a trench layer surrounding at least one of the first optical waveguide and the second optical waveguide.

9. The crosstalk measurement device according to any one of claims 1 to 8, wherein
a wavelength width of the incident light is equal to or more than 1 nm.

10. The crosstalk measurement device according to any one of claims 1 to 9, wherein
a length of the connection optical waveguide is longer than a length corresponding to a half-value time width of the incident light.

11. A crosstalk measurement method for an optical device including a first optical waveguide and a second optical waveguide that each include one end and other end and are parallel to each other, the crosstalk measurement method comprising:

a connection step of optically connecting the other end of the first optical waveguide and the other end of the second optical waveguide via a connection optical waveguide;
a measuring step of causing incident light emitted from an OTDR to enter from the one end of the first optical waveguide, and measuring, by the OTDR, power of emitted light emitted from the one end of the first optical waveguide, the emitted light including crosstalk light generated by crosstalk of the incident light from the first optical waveguide to the second optical waveguide; and
a processing step of obtaining a magnitude of crosstalk between the first optical waveguide and the second optical waveguide by using the measured power of the emitted light, wherein

an optical component having a larger loss of light incident from a side of the first optical waveguide toward a side of the second optical waveguide than a loss of light incident from the side of the second optical waveguide toward the side of the first optical waveguide is provided closer to the first optical waveguide than a midpoint of the connection optical waveguide.

FIG. 1

FIG. 2

FIG. 3

CONNECTING STEP — S1

MEASURING STEP — S2

PROCESSING STEP — S3

FIG. 4

FIG. 5

FIG. 6

FIG. 7

FIG. 8

FIG. 9

FIG. 10

## INTERNATIONAL SEARCH REPORT

| International application No. |
|---|
| **PCT/JP2024/025228** |

| | |
|---|---|
| **A.** | **CLASSIFICATION OF SUBJECT MATTER** |

*G01M 11/02*(2006.01)i
FI: G01M11/02 J

According to International Patent Classification (IPC) or to both national classification and IPC

| | |
|---|---|
| **B.** | **FIELDS SEARCHED** |

Minimum documentation searched (classification system followed by classification symbols)

G01M11/00-G01M11/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus (JDreamIII); JST7580 (JDreamIII); JSTChina (JDreamIII)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | JP 2022-111486 A (NIPPON TELEGRAPH AND TELEPHONE CORPORATION) 01 August 2022 (2022-08-01) | 1-11 |
| A | NAKAGAWA, M. et al., Novel Inter-Core Crosstalk Measurement Method Using a Loopback and Bidirectional OTDR Technique, Journal of Lightwave Technology, 15 June 2023, volume: 41, Issue: 12, pp. 3842-3848, DOI: 10.1109/JLT.2023.3263633 | 1-11 |

☐ Further documents are listed in the continuation of Box C.  ☑ See patent family annex.

| | |
|---|---|
| * | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 August 2024** | **03 September 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/025228**

| Patent document cited in search report | Publication date (day/month/year) | Patent family member(s) | Publication date (day/month/year) |
|---|---|---|---|
| JP        2022-111486        A | 01 August 2022 | (Family: none) | |

Form PCT/ISA/210 (patent family annex) (July 2022)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. TAKENAGA** ; **Y. ARAKAWA** ; **S. TANIGAWA** ; **N. GUAN** ; **S. MATSUO** ; **K. SAITOH** ; **M. KOSHIBA**. An Investigation on Crosstalk in Multi-Core Fibers by Introducing Random Fluctuation along Longitudinal Direction. *IEICE TRAN. COMMUN.*, 2011, vol. E94-B (2)
- **M. OHASHI** ; **K. KAWAZU** ; **A. NAKAMURA** ; **Y. MIYOSHI**. Simple backscattered power technique for measuring crosstalk of multi-core fibers. *OptoElectronics and Communications Conference, Busan, South Korea*, 2012, 1-25, https://doi.org/10.1109/OECC.2012.6276724

- **M. NAKAZAWA** ; **M. YOSHIDA** ; **T. HIROOKA**. Nondestructive measurement of mode couplings along a multi-core fiber using a synchronous multi-channel OTDR. *Optics Express*, 2012, vol. 20 (11), 12530-12540
- **M. NAKAGAWA** ; **M. OHZEKI** ; **K. TAKENAGA** ; **K. ICHII**. Novel Inter-Core Crosstalk Measurement Method Using a Loopback and Bidirectional OTDR Technique. *Journal of Lightwave Technology*, 2023, vol. 41 (12), 3842-3848